# EUROPÄISCHE PATENTSCHRIFT

(11) **EP 1 144 233 B1**
(45) Veröffentlichungstag und Bekanntmachung des Hinweises auf die Patenterteilung: **23.04.2003**
(21) Anmeldenummer: 99966937.7
(22) Anmeldetag: 09.12.1999
(51) Int. Cl.: B60T 8/42, B60T 8/44, B60T 13/16, B60T 17/22, B60T 8/88

(54) **BREMSANLAGE MIT HYDRAULISCHER BREMSKRAFTVERSTÄRKUNG UND VERFAHREN HIERZU**
BRAKE SYSTEM WITH HYDRAULIC BRAKE BOOSTER AND CORRESPONDING METHOD
SYSTEME DE FREINAGE A ASSISTANCE AU FREINAGE HYDRAULIQUE ET PROCEDE CORRESPONDANT

(30) Priorität: 22.01.1999 DE 19902444
(43) Veröffentlichungstag der Anmeldung: 17.10.2001
(73) Patentinhaber: DaimlerChrysler AG, 70567 Stuttgart (DE)
(72) Erfinder: FRENTZ, Georg, D-72622 Nürtingen (DE); WOLL, Peter, D-76646 Bruchsal (DE)
(86) Internationale Anmeldenummer: EP9909704
(87) Internationale Veröffentlichungsnummer: WO00043246

(56) Entgegenhaltungen:
- DE-A- 3 131 856
- DE-A- 3 502 018
- DE-A- 3 511 535
- DE-A- 3 526 556
- DE-A- 4 322 182

## Beschreibung

Die Erfindung betrifft eine Bremsanlage mit hydraulischer Bremskraftverstärkung und ein Verfahren hierzu nach dem Oberbegriff des Anspruches 1 bzw. 6.

Aus der DE 31 31 856 A1 ist eine solche Bremsanlage bekannt. Der Hauptbremszylinder ist mittels einer Bremsleitung über ein Mehrstellungsventil mit der Radbremseinrichtung verbunden. Eine Servobremsdruckbeschaffungseinrichtung kann über das Mehrstellungsventil zugeschaltet werden und zusätzlichen Bremsdruck an der Radbremseinrichtung liefern. Von der Bremsleitung zweigt zwischen dem Hauptbremszylinder und dem Mehrstellungsventil eine Zweigleitung ab, die mit dem Pedalweg-Simulator verbunden ist und mittels eines Magnetventils dann abgesperrt wird, wenn ein Defekt in der Bremsanlage, z.B. in der Servobremsdruckbeschaffungseinrichtung vorliegt.

Der Pedalweg-Simulator dient dazu, dem Fahrer ein gewohntes und dosierbares Pedalverhalten des Bremspedals zu vermitteln und eine beim Bremsen signifikante Pedal-Wegstrecke zu erreichen.

Der Pedalweg-Simulator ist bei einem Defekt fluidisch vollständig abgetrennt, wobei das zur Zeit der Abtrennung durch das Magnetventil im Pedalwegsimulator befindliche Hydraulikmedium dort eingeschlossen ist und für den weiteren Bremsdruckaufbau beispielsweise bei nachfolgenden Bremsvorgängen nicht zur Verfügung steht.

Aus der DE 35 26 556 A1 ist eine Bremsanlage für Kraftfahrzeuge bekannt, die einen als Tandemzylinder ausgebildeten Hauptzylinder bzw. Bremsdruckgeber umfaßt, der von einem Bremspedal betätigt wird und eine Radbremseinrichtung mit unter Druck stehendem Hydraulikmedium beaufschlagt, welches der Radbremseinrichtung aus einem Vorratsbehälter zugeleitet wird. Weiterhin ist ein Hilfsdruck-Versorgungssystem vorgesehen, das eine Hydraulikpumpe und einen die Pumpe betätigenden elektrischen Motor umfaßt. Über ein Schaltventil kann das von der Pumpe geförderte Medium der Radbremseinrichtung zugeführt werden.

Eine Druckkammer des vom Bremspedal beaufschlagten Hauptzylinders kommuniziert mit dem Pedalweg-Simulator, der als Zylinder mit einem verschiebbaren Stellkolben ausgebildet ist. Der Stellkolben begrenzt ein Verdrängungsvolumen im Zylinder, das über eine Hydraulikleitung mit dem Vorratsbehälter verbunden ist.

Wird das Volumen der Druckkammer des Hauptzylinders durch den Druck des Bremspedals verringert, strömt das Medium aus der Druckkammer in den Pedalweg-Simulator und beaufschlagt den Stellkolben, welcher in Richtung des Verdrängungsvolumens verstellt wird, wobei das im Verdrängungsvolumen enthaltene Medium in den Vorratsbehälter entweicht. Zugleich wird der Druck im Verdrängungsvolumen des Pedalweg-Simulators zur dynamischen Modulation des Bremsdrucks verwendet, welcher über die motorisch betriebene Hydraulikpumpe des Hilfsdruck-Versorgungssystems erzeugt wird.

Um bei einem Ausfall der Stromversorgung ausreichend Bremskraft bereitzustellen, wird bei Anlagen dieser Art im Störfall der Bremsdruck nicht über das Hilfsdruck-Versorgungssystem, sondern unmittelbar über den Hauptzylinder erzeugt. Hierdurch kann Gefahrensituationen vorgebeugt werden, die durch einen Ausfall der Hydraulikpumpe, beispielsweise infolge eines Zusammenbruchs der Stromversorgung oder einen Ausfall des Steuergeräts der Anlage, entstehen können.

Tritt bei den oben erläuterten Bremsanlagen ein Störfall während eines Bremsvorganges auf, bei dem das Bremspedal bereits teilweise durchgedrückt ist, so entsteht das Problem, daß für den im Notbetrieb erforderlichen Druckaufbau des Bremsdrucks über den Hauptzylinder nur der restliche, verbleibende Pedalweg bis zum Anschlag des Bremspedals zur Verfügung steht. Dieser Pedalweg ist gegenüber dem unbetätigten Bremspedal reduziert und reicht unter Umständen zur Erzeugung der erforderlichen Bremskraft nicht aus. Ist das Bremspedal im Moment des Auftretens des Störfalls bereits vollständig durchgedrückt, so kann überhaupt kein zusätzlicher Bremsdruck über den Hauptzylinder erzeugt werden.

Der Erfindung liegt das Problem zugrunde, elektro-hydraulische Bremsen mit einfachen Mitteln störsicherer auszubilden.

Dieses Problem wird erfindungsgemäß mit den Merkmalen des Anspruches 1 bzw. 6 gelöst.

Gemäß der Neuerung ist im Hydraulikweg zwischen der Radbremseinrichtung und dem Verdrängungsvolumen des Pedalweg-Simulators eine Rückförderleitung angeordnet, über die Hydraulikmedium aus der Radbremseinrichtung nach Beendigung des Bremsvorgangs im Normalfall zunächst in das Verdrängungsvolumen und über eine weitere Hydraulikleitung zurück in das Reservoir gefördert wird. In der Hydraulikleitung zwischen dem Verdrängungsvolumen und dem Reservoir befindet sich ein Rücklaufventil, das zwischen einer die Hydraulikleitung freigebenden Öffnungsstellung und einer die Hydraulikleitung schließenden Sperrstellung verstellbar ist. Im Normalfall befindet sich das Rücklaufventil in Öffnungsstellung, so daß Hydraulikmedium aus der Radbremseinrichtung in das Reservoir abfließt.

Im Störfall dagegen wird das Rücklaufventil in Sperrstellung versetzt, so daß zwar die Verbindung zwischen der Radbremseinrichtung und dem Verdrängungsvolumen des Pedalweg-Simulators noch geöffnet ist, die Verbindung zwischen dem Verdrängungsvolumen und dem Reservoir aber unterbrochen und folglich hydraulisch steif ist. Dies hat zur Folge, daß bei einem Störfall, der während eines Bremsvorganges auftritt, die in der Radbremseinrichtung gespeicherte Energie ein Rückströmen des Hydraulikmediums aus der Radbremseinrichtung über die Rückförderleitung in das Verdrängungsvolumen des Pedalweg-Simulators bewirkt, das aufgrund der unterbrochenen Verbindung zum Reservoir sich mit Hydraulikmedium füllt und sein Volumen vergrößert. Die Volumenzunahme des Verdrängungsvolumens hat zur Folge, daß das mit dem Verdrängungsvolumen in Verbindung stehende Bremspedal in Richtung seiner Ausgangsstellung zurückgesetzt wird, so daß der dem Fahrer zur Verfügung stehende Pedalweg des Bremspedals automatisch vergrößert wird. Der zusätzliche Pedalweg kann nun für die vom Fahrer aufzubringende Bremskraft genutzt werden, die in Störfällen unmittelbar über die Betätigungs- und Hydraulikeinheit als hydraulischer Bremsdruck auf die Radbremseinrichtung durchgreift.

In einer vorteilhaften Weiterbildung ist vorgesehen, daß das Rücklaufventil in der Leitung zwischen dem Verdrängungsvolumen und dem Reservoir elektrisch betätigbar ist und im unbestromten Zustand in einer den Durchfluß blockierenden Sperrstellung steht. Dadurch ist gewährleistet, daß das Verdrängungsvolumen im Störfall immer vom Reservoir abgeschnitten ist und somit das in das Verdrängungsvolumen rückgeförderte Medium sich im Verdrängungsvolumen sammeln muß und zwangsläufig zu einer Ausdehnung dieses Volumens führt.

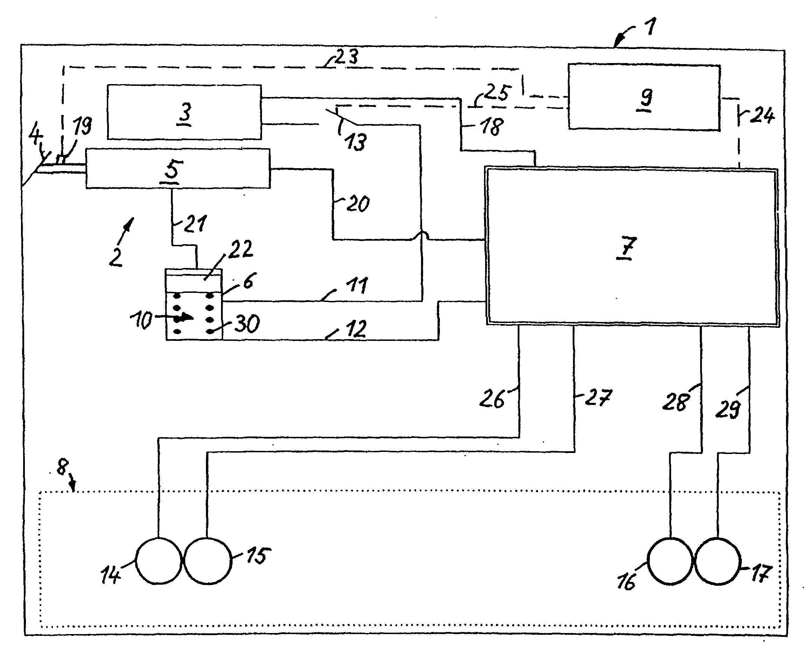

Weitere Vorteile und zweckmäßige Ausführungsformen sind den weiteren Ansprüchen, der Figurenbeschreibung und der Zeichnung zu entnehmen, die eine schematische Darstellung einer elektrohydraulischen Bremsanlage für ein Kraftfahrzeug mit automatischer Rückstellung des Pedalweg-Simulators bei Störfällen zeigt.

Die Bremsanlage 1 ist als elektro-hydraulische Bremse ausgebildet und besteht aus einer Betätigungseinheit 2, einer mit der Betätigungseinheit 2 in Verbindung stehenden Hydraulikeinheit 7 und einer Radbremseinrichtung 8 für die vier Fahrzeugräder 14, 15, 16, 17, wobei die Radbremseinrichtung 8 von der Hydraulikeinheit 7 mit Hydraulikmedium versorgt wird und aus vier Bremseinheiten besteht, die jeweils einem Fahrzeugrad 14 bis 17 zugeordnet sind.

Die Betätigungseinheit 2 umfaßt im einzelnen ein Hydraulikreservoir 3, ein Bremspedal 4, einen Bremsdruckgeber 5 und einen Pedalweg-Simulator 6. Das Hydraulikreservoir 3 versorgt über Hydraulikleitungen 11 und 18 den Pedalweg-Simulator 6 und die Hydraulikeinheit 7 mit Hydraulikmedium. Der Pedalweg des Bremspedal 4 wird von einem Wegsensor 19 aufgenommen; alternativ zu einem Wegsensor kann auch ein Kraftsensor vorgesehen sein, der dem vom Fahrer auf das Bremspedal 4 ausgeübten Pedaldruck mißt. Der vom Bremspedal 4 beaufschlagte Bremsdruckgeber 5 ist üblicherweise als Hydraulikzylinder ausgebildet, beispielsweise als Tandemzylinder, und steht über eine Leitung 20 mit der Hydraulikeinheit 7 in Verbindung. Über die Leitung 20 wird in Störfällen bei defekter Bremsanlage der Pedaldruck des Bremspedals 4 unmittelbar als hydraulischer Bremsdruck umgesetzt und über die Hydraulikeinheit 7 der Radbremsanlage 8 zugeführt.

Die Hydraulikeinheit 7 umfaßt zur Generierung des Bremsdrucks in der erforderlichen Höhe einen nicht dargestellten Druckerzeuger, üblicherweise eine elektrisch angetriebene Hydraulikpumpe. Über Leitungen 26 bis 29 wird den Bremseinheiten der Radbremseinrichtung 8 für die Fahrzeugräder 14 bis 17 der in der Hydraulikeinheit 7 erzeugte Hydraulikdruck als Bremsdruck zugeführt.

Der Bremsdruckgeber 5 steht über eine Leitung 21 mit einem Pedalweg-Simulator 6 in Verbindung. Der Pedalweg-Simulator 6 erfüllt die Funktion, ein elastisches, nachgiebiges und gut dosierbares Verhalten des Bremspedals 4 zu simulieren. Der Pedalweg-Simulator 6 besteht aus einem Hydraulikzylinder mit einem Verstellkolben 22 und einem Verdrängungsvolumen 10, das über den Verstellkolben 22 in Abhängigkeit der Pedalstellung des Bremspedals 4 veränderlich eingestellt werden kann. Der Verstellkolben 22 wird von einer Feder 30 mit Federkraft beaufschlagt, die den Verstellkolben 22 in eine das Verdrängungsvolumen 10 vergrößernde Stellung drängt, in welcher das Bremspedal 4 seine Ausgangsstellung einnimmt. Das Verdrängungsvolumen 10 ist über eine Rückförderleitung 12 mit der Hydraulikeinheit 7 und über die Hydraulikleitung 11 mit dem Reservoir 3 verbunden. In der Hydraulikleitung 11 ist ein elektrisch betätigbares Rücklaufventil 13 angeordnet.

Weiterhin ist ein Steuergerät 9 vorgesehen, das die Funktion der einzelnen Bauteile der Bremsanlage steuert und koordiniert und insbesondere über eine Steuerleitung 23 Meßsignale des Sensors 19 aufnimmt bzw. als Eingangssignale empfängt und über eine Steuerleitung 24 Ausgangssignale an den Elektromotor in der Hydraulikeinheit 7 aussendet bzw. über eine Steuerleitung 25 das elektrische Rücklaufventil 13 steuert.

Im regulären Bremsbetrieb mit intakter Bremsanlage wird je nach Ausführung des Sensors 19 der Pedalweg oder der Pedaldruck des Bremspedals 4 sensiert, der Pedalweg bzw. der Pedaldruck dem Steuergerät 9 als Eingangssignal zugeführt, im Steuergerät 9 aus dem Pedalweg bzw. aus dem Pedaldruck ein korrespondierender Bremsdruck ermittelt und ein dem Bremsdruck entsprechendes Ausgangssignal der Hydraulikeinheit 7 zur Einstellung des Pumpenmotors der Hydraulikpumpe zugeführt. Das benötigte Hydraulikmedium wird der Hydraulikeinheit 7 über die Leitung 18 vom Reservoir 3 zugeführt.

Weiterhin wird während bzw. nach jedem Bremsvorgang das elektrisch betätigbare Rücklaufventil 13 in der Hydraulikleitung 11 zwischen dem Pedalweg-Simulator 6 und dem Reservoir 3 geschlossen, so daß nach Beendigung des Bremsvorganges das in den Bremseinheiten der Radbremseinrichtung 8 gespeicherte Hydraulikmedium über die Rückförderleitung 12, das Verdrängungsvolumen 10 des Pedalweg-Simulators 6 und die Hydraulikleitung 11 in das Reservoir 3 zurückgeleitet werden kann. Zugleich wird der Verstellkolben 22 des Simulators 6 von der Feder 30 in seine Ausgangsstellung versetzt, wodurch auch das Bremspedal 4 wieder seine Ausgangsstellung einnimmt.

Das elektrisch betätigbare Rücklaufventil 13 ist so ausgebildet, daß im unbestromten bzw. ungesteuerten Zustand das Ventil in Sperrstellung steht, in der die zum Reservoir 3 führende Hydraulikleitung 11 blockiert ist. Um die Hydraulikleitung 11 zu öffnen, muß das Rücklaufventil 13 voll funktionstüchtig sein und muß von einem Stellsignal des Steuergeräts 9 beaufschlagt werden. Falls im Steuergerät 9 nicht das korrekte Stellsignal für das Rückschlagventil 13 erzeugt wird oder falls die Stromversorgung ausfällt, kann das Rückschlagventil 13 nicht in seine den Durchfluß durch die Hydraulikleitung 11 ermöglichende Öffnungsstellung versetzt werden; das Rückschlagventil 13 verharrt in seiner blockierenden Sperrstellung, in der die Verbindung zwischen Pedalweg-Simulator 6 und Reservoir hydraulisch steif ist.

Falls ein Störfall auftritt, bei dem das Steuergerät 9 ausfällt und/oder die Stromversorgung der elektrisch zu betätigenden Aggregate ausfällt, kann das Rücklaufventil 13 nicht in die öffnungsstellung verstellt werden. Nach Beendigung des Bremsvorganges hat dies zur Folge, daß die Verbindung zwischen dem Verdrängungsvolumen 10 und dem Reservoir 3 unterbrochen bleibt. Das über die Rückförderleitung 12 aufgrund des höheren Bremsdruckes der Bremseinheiten der Radbremseinrichtung 8 zum Pedalweg-Simulator geförderte Hydraulikmedium strömt in das Verdrängungsvolumen 10 und bewirkt - auch bei Betätigung des Bremspedals durch den Fahrer - ein Rücksetzen des Bremspedals in die Ausgangsstellung. Falls der Strom oder das Steuergerät während eines Bremsvorganges ausfällt, kann auf diese Weise sichergestellt werden, daß aufgrund des Rücksetzens des Bremspedals wieder der gesamte Pedalweg für eine Notbremsung über den Bremsdruckgeber 5, die Leitung 20 und die Hydraulikeinheit 7 zur Verfügung steht.

## Patentansprüche

1. Bremsanlage mit hydraulischer Bremskraftverstärkung, mit einer hydraulischen Betätigungseinheit (2), die ein Hydraulikreservoir (3), ein Bremspedal (4), einen Bremsdruckgeber (5) und einen Pedalweg-Simulator (6) umfaßt, mit einer einen Druckerzeuger umfassenden Hydraulikeinheit (7), mit einer hydraulischen Radbremseinrichtung (8) und mit einem Steuergerät (9) zur Koordinierung der Funktionen der Betätigungseinheit (2), der Hydraulikeinheit (7) und der Radbremseinrichtung (8), wobei der Pedalweg-Simulator (6) ein veränderliches Verdrängungsvolumen (10) aufweist,
**dadurch gekennzeichnet,**
- **daß** die Radbremseinrichtung (8) zur Rückförderung von Hydraulikmedium mittels einer Rückförderleitung (12) mit dem Verdrängungsvolumen (10) des Pedalweg-Simulators (6) und das Verdrängungsvolumen (10) des Pedalweg-Simulators (6) über eine Hydraulikleitung (11) mit dem Hydraulikreservoir (3) verbunden ist, so daß Hydraulikmedium aus der Radbremseinrichtung (8) über das Verdrängungsvolumen (10) des Pedalweg-Simulators (6) in das Hydraulikreservoir (3) zurück förderbar ist,
- wobei in der Hydraulikleitung (11) zwischen dem Hydraulikreservoir (3) und dem Verdrängungsvolumen (10) des Pedalweg-Simulators (6) ein Rücklaufventil (13) angeordnet ist, welches im Störfall - bei defekter Bremsanlage (1) - in eine die Hydraulikleitung (11) blockierende Sperrstellung versetzbar ist.

2. Bremsanlage nach Anspruch 1,
**dadurch gekennzeichnet,**
**daß** das Rücklaufventil (13) elektrisch betätigbar ist, wobei das Rücklaufventil (13) im stromlosen Zustand in Sperrstellung steht.

3. Bremsanlage nach Anspruch 1 oder 2,
**dadurch gekennzeichnet,**
**daß** der Pedalweg-Simulator (6) als Hydraulikzylinder mit verschiebbarem Verstellkolben (22) zur veränderlichen Einstellung des Verdrängungsvolumens (10) ausgebildet ist.

4. Bremsanlage nach einem der Ansprüche 1 bis 3,
**dadurch gekennzeichnet,**
**daß** die Hydraulikeinheit (7) im Strömungsweg zwischen der Betätigungseinheit (2) und der Radbremseinrichtung (8) angeordnet ist.

5. Bremsanlage nach Anspruch 4,
**dadurch gekennzeichnet,**
**daß** die Rückförderleitung (12) zwischen der Hydraulikeinheit (5) und dem Verdrängungsvolumen (10) des Pedalweg-Simulators (6) angeordnet ist.

6. Verfahren zur Verstärkung der Bremskraft in einer hydraulischen Bremsanlage, insbesondere Verfahren zum Betrieb der Bremsanlage nach einem der Ansprüche 1 bis 5, bei dem der Pedalweg eines Bremspedals (4) in einen Bremsdruck umgesetzt wird, welcher eine Radbremseinrichtung (8) beaufschlagt, wobei der Pedalweg ein Verdrängungsvolumen (10) eines Pedalweg-Simulators beeinflußt,
**dadurch gekennzeichnet,**
- **daß** im Normalfall nach Beendigung eines Bremsvorgangs Hydraulikmedium aus der Radbremseinrichtung (8) mittels einer Rückförderleitung (12) in das Verdrängungsvolumen (10) des Pedalweg-Simulators (6) und aus dem Verdrängungsvolumen (10) des Pedalweg-Simulators (6) über eine Hydraulikleitung (11) in ein Hydraulikreservoir (3) geleitet wird, und
- **daß** im Störfall während eines Bremsvorgangs die Hydraulikleitung (11) zwischen dem Verdrängungsvolumen (10) und dem Hydraulikreservoir (3) unterbrochen wird und das Hydraulikmedium der Radbremseinrichtung (8) in dem Verdrängungsvolumen (10) des Pedalweg-Simulators (6) gesammelt wird.

7. Verfahren nach Anspruch 6,
**dadurch gekennzeichnet,**
**daß** ein elektrisch betätigbares Rücklaufventil (13) in der Hydraulikleitung (11) zwischen dem Pedalweg-Simulator (6) und dem Hydraulikreservoir (3) im unbestromten Zustand in Sperrstellung steht, in der der Durchfluß durch die Hydraulikleitung (11) blockiert ist.

## Claims

1. Brake system with hydraulic brake booster system, having a hydraulic operating unit (2) comprising a hydraulic reservoir (3), a brake pedal (4), a brake pressure transmitter (5) and a pedal travel simulator (6), having a hydraulic unit (7) incorporating a pressure generator, a hydraulic wheel brake system (8) and a control device (9) for coordinating the functions of the operating unit (2), the hydraulic unit (7) and the wheel brake system (8), the pedal travel simulator (6) having a variable displacement volume (10),
**characterised in that**
- in order to operate a return circulation of hydraulic medium, the wheel brake system (8) is connected to the displacement volume (10) of the pedal travel simulator (6) by means of a return line (12) and the displacement volume (10) of the pedal simulator (6) is connected via a hydraulic line (11) to the hydraulic reservoir (3) so that hydraulic medium is conveyed out of the wheel brake system (8) via the displacement volume (10) of the pedal travel simulator (6) back into the hydraulic reservoir (3),
- a return valve (13) being provided in the hydraulic line (11) between the hydraulic reservoir (3) and the displacement volume (10) of the pedal travel simulator (6), which, in the event of a fault - causing a defect in the brake system (1) - can be shifted into a closed position blocking off the hydraulic line (11).

2. Brake system as claimed in claim 1,
**characterised in that**
the return valve (13) is electrically operable, the return valve (13) being in the closed position in the deenergized state.

3. Brake system as claimed in claim 1 or 2,
**characterised in that**
the pedal travel simulator (6) is provided in the form of a hydraulic cylinder with displaceable adjusting piston (22) for variably adjusting the displacement volume (10).

4. Brake system as claimed in one of claims 1 to 3,
**characterised in that**
the hydraulic unit (7) is disposed in the flow path between the operating unit (2) and the wheel brake system (8).

5. Brake system as claimed in claim 4,
**characterised in that**
the return line (12) is disposed between the hydraulic unit (5) and the displacement volume (10) of the pedal travel simulator (6).

6. Method of boosting the braking force in a hydraulic brake system, in particular a method of operating the brake system as claimed in one of claims 1 to 5, in which the pedal travel of a brake pedal (4) is converted into a braking pressure which pressurises a wheel brake system (8), the pedal travel influencing a displacement volume (10) of a pedal travel simulator,
**characterised in that**
- during normal operation, hydraulic medium from the wheel brake system (8) is delivered by means of a return line (12) to the displacement volume (10) of the pedal travel simulator (6) and from the displacement volume (10) of the pedal travel simulator (6) via a hydraulic line (11) into a hydraulic reservoir (3) and
- if a fault occurs during a braking procedure, the hydraulic line (11) between the displacement volume (10) and the hydraulic reservoir (3) is interrupted and the hydraulic medium of the wheel brake system (8) collects in the displacement volume (10) of the pedal travel simulator (6).

7. Method as claimed in claim 6,
**characterised in that**
an electrically operable return valve (13) in the hydraulic line (11) between the pedal travel simulator (6) and the hydraulic reservoir (3) is in the locked position in the de-energized state, in which circulation through the hydraulic line (11) is blocked.

## Revendications

1. Installation de freinage à assistance hydraulique d'amplification de la force de freinage, avec une unité d'actionnement hydraulique (2) qui englobe un réservoir hydraulique (3), une pédale de frein (4), un générateur de pression de freinage (5) ou maître-cylindre et un simulateur de déplacement de pédale (6), avec une unité hydraulique (7) englobant un élément de fourniture de pression, avec un dispositif de freinage de roues (8) hydraulique, et avec un appareil de commande (9) pour coordonner les fonctions de l'unité d'actionnement (2), de l'unité hydraulique (7) et du dispositif de freinage de roues (8), le simulateur de déplacement de pédale (6) présentant un volume de déplacement de refoulement (10) variable,
**caractérisée**
- **en ce que** le dispositif de freinage de roues (8), pour le refoulement de retour de fluide hydraulique, est relié au moyen d'une conduite de refoulement de retour (12), au volume de déplacement de refoulement (10) du simulateur de déplacement de pédale (6), et le volume de déplacement de refoulement (10) du simulateur de déplacement de pédale (6) est relié par l'intermédiaire d'une conduite hydraulique (11), au réservoir hydraulique (3), de sorte que du fluide hydraulique peut être refoulé en retour du dispositif de freinage de roues (8) dans le réservoir hydraulique (3) en passant par le volume de déplacement de refoulement (10) du simulateur de déplacement de pédale (6),
- une vanne d'écoulement de retour (13) étant disposée dans la conduite hydraulique (11) entre le réservoir hydraulique (3) et le volume de déplacement de refoulement (10) du simulateur de déplacement de pédale (6), et cette vanne d'écoulement de retour pouvant être transférée dans une position de fermeture bloquant la conduite hydraulique (11) en cas de panne, à savoir pour une installation de freinage (1) défectueuse.

2. Installation de freinage selon la revendication 1, **caractérisée en ce que** la vanne d'écoulement de retour (13) peut être actionnée électriquement, la vanne d'écoulement de retour (13) étant en position de fermeture dans l'état non alimenté en courant.

3. Installation de freinage selon la revendication 1 ou 2, **caractérisée en ce que** le simulateur de déplacement de pédale (6) est réalisé sous forme de vérin hydraulique comprenant un piston de réglage (22) coulissant, pour régler de manière variable le volume de déplacement de refoulement (10).

4. Installation de freinage selon l'une des revendications 1 à 3, **caractérisée en ce que** l'unité hydraulique (7) est placée dans le parcours d'écoulement entre l'unité d'actionnement (2) et le dispositif de freinage de roues (8).

5. Installation de freinage selon la revendication 4, **caractérisée en ce que** la conduite de refoulement de retour (12) est disposée entre l'unité hydraulique (5) et le volume de déplacement de refoulement (10) du simulateur de déplacement de pédale (6).

6. Procédé d'amplification de la force de freinage ou d'assistance dans une installation de freinage hydraulique, notamment procédé destiné à faire fonctionner l'installation de freinage selon l'une des revendications 1 à 5, d'après lequel le déplacement de pédale d'une pédale de frein (4) est converti en une pression de freinage qui alimente un dispositif de freinage de roues (8), le déplacement de pédale influençant un volume de déplacement de refoulement (10) d'un simulateur de déplacement de pédale (6),
**caractérisé**
- **en ce que** dans le cas normal, après achèvement d'une phase de freinage, du fluide hydraulique est envoyé du dispositif de freinage de roues (8) dans le volume de déplacement de refoulement (10) du simulateur de déplacement de pédale au moyen d'une conduite de refoulement de retour (12), et du volume de déplacement de refoulement (10) du simulateur de déplacement de pédale (6) dans un réservoir hydraulique (3) par l'intermédiaire d'une conduite hydraulique (11), et
- **en ce qu'**en cas de panne durant une phase de freinage, la conduite hydraulique (11) entre le volume de déplacement de refoulement (10) et le réservoir hydraulique (3) est interrompue, et le fluide hydraulique du dispositif de freinage de roues (8) est collecté dans le volume de déplacement de refoulement (10) du simulateur de déplacement de pédale (6).

7. Procédé selon la revendication 6, **caractérisé en ce qu'**une vanne d'écoulement de retour (13) pouvant être actionnée électriquement, dans la conduite hydraulique (11) entre le simulateur de déplacement de pédale (6) et le réservoir hydraulique (3), est, dans l'état non alimenté en courant, en position de fermeture pour laquelle le passage de l'écoulement à travers la conduite hydraulique (11) est bloqué.
